# EUROPEAN PATENT APPLICATION

(11) **EP 2 372 593 A2**
(43) Date of publication of application: **05.10.2011**
(21) Application number: 09835215.6
(22) Date of filing: 16.12.2009
(51) Int. Cl.: G06F 21/00

(54) **METHOD FOR PROTECTING A SOFTWARE LICENSE, SYSTEM FOR SAME, SERVER, TERMINAL, AND COMPUTER-READABLE RECORDING MEDIUM**

(30) Priority: 26.12.2008 KR 20080134892
(71) Applicant: Sk Telecom Co., LTD, Seoul 100-999 (KR)
(72) Inventor: KWON, Oin, Seoul 138-040 (KR); OH, Sehyun, Seoul 135-280 (KR); KIM, Minseok, Seoul 137-060 (KR); KIM, Sung, Seongnam-si Gyeonggi-do 463-772 (KR); SHIN, Jungkeum, Seoul 137-947 (KR); NAM, Giseon, Seoul 121-040 (KR)
(74) Representative: Barth, Stephan Manuel
(86) International application number: PCT/KR2009/007530
(87) International publication number: WO 2010/074449

(57) **Abstract**

The present disclosure relates to software license protection method, system, and medium readable by server, terminal, and computer. The present disclosure provides a software license protection terminal comprising: a terminal communicator operated in association with a coupled dongle type token; a terminal controller for operating and controlling certain software by checking whether the token has the requisite seculet to run the software and if so, transmitting to the token an executive instruction to run the seculet, and receiving the executive result from the token to activate the specific software; and a terminal storage for storing the software. The disclosure achieves overcoming software vulnerabilities to reverse engineering to keep the customers from inconveniences of authentication inconveniences with typical online dependency.

## Description

### [Technical Field]

The present disclosure relates to a method for protecting a software license, a system for the same, terminal, and computer-readable recording medium. More particularly, the present disclosure relates to software license protection method, system, server, terminal, and computer-readable medium wherein a user and purchaser of software for a specific operation is provided with a software module (hereinafter called secure+applet=seculet) that is a specific software's indispensable operational component (including a compressing algorithm in case of a compression software, a scoring rule in a game software, and object arrangement logic in a document editing software) from a server to a token of a smart card with an internal computing capability or such dongle coupled to a user terminal, then the user will be encouraged to check whether the seculet is present in the token dongle, and if there is one, an instruction to the token is transmitted to proceed the seculet being executed inside the token, whereby the execution result received activates the specific software.

### [Background Art]

The statements in this section merely provide background information related to the present disclosure and may not constitute prior art.

Software in general is sold directly off-line on media including CD-ROMs and DVD-ROMs, or downloaded for payments by the consumers through the software maker's Internet venue. For the software buyer/user to install the product and use it, it is necessary to input a provided copy authentication CD-key in the individual terminal whereby the software maker legitimately authorizes the use of the product.

However, due to the bare exposure of the CD-keys in the form of common text they are helplessly copied along with the CD-ROM contents over and over for liberal services to illegitimate third party individuals. Needing no CD-key at hand, they reach to employ an extra illegal CD-key generating program or a cracking method into the CD-key authentication program itself to eventually hack the copy authentication process even letting P2P sites to uncontrollably distribute among people and thus fatally defeating many efforts to protect the software copyrights .

Meanwhile, there is a hardware dongle of an encoded (or encrypted) key method in existence over the CD-key authentication scheme among conventional technologies, but they may be easily defeated by reversely engineering their authentication logics, and disadvantageous that the software specific performances yield low effectiveness for the costs.

In response, an extra hardware device was provided for attachment to a terminal port for printer or a USB port so that its presence is checked or the device is arranged to store encoding/decoding key values and algorithm until the encoded code is decoded at the software execution. However, the structural limitation having software at execution be decoded before it gets loadable into the terminal memory allows bypassing the protection scheme to hack into the software frequently and offers an open chance for even the nonprofessional general public to use an available automatic hacking tool to actually commit violations of the copy protection technologies especially once they become more popular. Besides, virtual environment (virtual machine) was used in order to thwart reverse engineering attempts and protect the identifying logic for the authentication key to software, but statistics show actual hackings and distributions of automatic hacking tools.

### [Disclosure]

### [Technical Problem]

The present disclosure seeks to provide software license protection method, system, and medium readable by server, terminal and computer medium wherein a user/purchaser of certain software is offered a requisite component of a seculet running the software from a server to a dongle type token universally attachable to a user terminal, prompting the user during the execution of the software to check whether the requisite seculet, an operational component of the software is present in the dongle type token so that, if such presence is positive, an executive instruction to run the seculet is transmitted to the token and its executive result is received to control the software to go on running.

### [Technical Solution]

To achieve the object, the present disclosure provides a software license protection terminal comprising: a terminal communicator operated in association with a coupled dongle type token; a terminal controller for operating and controlling certain software by checking whether the token has the requisite seculet to run the software and if so, transmitting to the token an executive instruction to run the seculet, and receiving the executive result from the token to activate the specific software; and a terminal storage for storing the software.

Another aspect of the present disclosure provides a software license protection server comprising: a server communicator operated in association with a user terminal; a server controller for checking whether user terminal has a dongle type token attachment after purchase of certain software and if so, encoding and transmitting a requisite seculet to run the software to the token; and a server storage for storing at least one of the specific software and the seculet for information.

Yet another aspect of the present disclosure provides a software license protection system comprising: a user terminal for operating and controlling certain software at the presence of the requisite seculet to run the software by transmitting an executive instruction to run the seculet and upon receipt of the executive result activating the software; and a token storing the seculet and being capable of coupling in a dongle format to the user terminal for transmitting the seculet to the user terminal and upon receiving the executive instruction relaying the executive result of loading the seculet onto executable memory areas.

Yet another aspect of the present disclosure provides a software license protection method comprising: executing specific software; checking for the presence of the seculet to run the specific software in an associated token, and if present, transmitting an executive instruction for executing the seculet to the token; and upon receipt of the result of executing the seculet activating the software.

Yet another aspect of the present disclosure provides a computer readable medium which encodes a computer program that implements on a computer the respective steps of the software license protection method as described above.

### [Advantageous Effects]

According to the present disclosure as above, a user/purchaser of certain software is offered a requisite component of seculet running the software from a server to a dongle type token physically isolated and universally attachable to a user terminal, prompting the user during the execution of the software to check whether the requisite seculet to run the software is present in the dongle type token and, if it is checked to be present, transmitting an executive instruction to run the seculet to the token and upon receipt of the executive result activating the software in a controlled manner.

In addition, the present disclosure provides an indispensible component in operating specific software separated and formed into a seculet that can be saved in a protective token shell until it is executed, whereby overcoming vulnerabilities to reverse engineering of valuable software to maintain the licensing sovereignty and keep the customers from inconveniences of typical authentication annoyances thru networks, host terminals, and others, which are entirely circumvented with a coupling of a token.

### [Description of Drawings]

FIG. 1 is a schematic block diagram of a software license protection system in accordance with an aspect of the present disclosure;

FIG. 2 is a schematic block diagram of a user terminal in accordance with the aspect of FIG. 1;

FIG. 3 is a schematic block diagram of a software providing server in accordance with the aspect of FIG. 1;

FIG. 4 is a schematic block diagram of a token in accordance with the aspect of FIG. 1;

FIG. 5 is a schematic block diagram of a seculet in accordance with an aspect;

FIG. 6 is a flow chart for illustrating a method for the software providing server to provide a seculet; and

FIG. 7 is a flow chart for illustrating a method for executing specific software with the user terminal operating in association with the token.

### [Mode for Invention]

Hereinafter, an exemplary aspect of the present disclosure will be described with reference to the accompanying drawings. In the following description, the same elements will be designated by the same reference numerals although they are shown in different drawings. Further, in the following description of the present disclosure, a detailed description of known functions and configurations incorporated herein will be omitted when it may make the subject matter of the present disclosure rather unclear.

Also, in describing the components of the present disclosure, there may be terms used like the first, second, A, B, (a), and (b). These are solely for the purpose of differentiating one component from the other but not to imply or suggest the substances, order or sequence of the components. If a component were described as 'connected', 'coupled', or 'linked' to another component, it may mean the components are not only directly 'connected', 'coupled', or 'linked' but also are indirectly 'connected', 'coupled', or 'linked' via a third component.

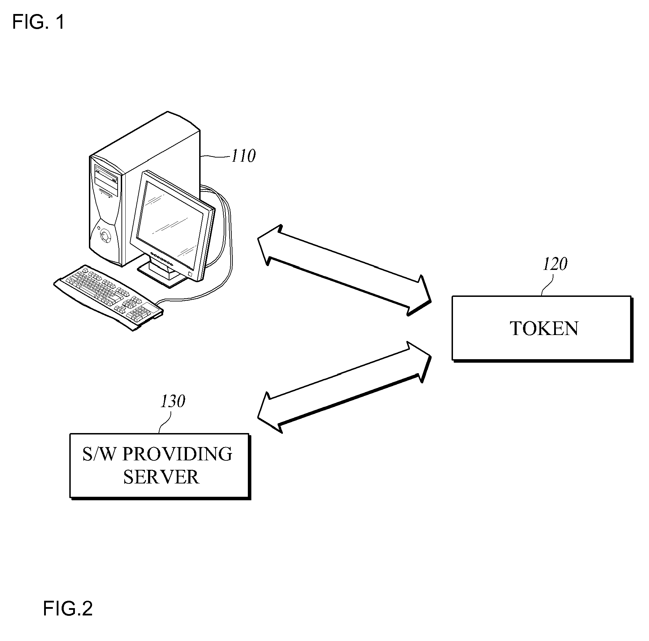

Referring now to FIG. 1, there is generally shown a software license protection system in a schematic block diagram according to an aspect of the present disclosure.

The software license protection system may comprise a user terminal 110, a token 120, and a software providing server 130.

The user terminal 110 represents a terminal which may respond to user's key operations for receiving various web page data via wired and wireless communication networks, and include a personal computer or PC, notebook or laptop computer, personal digital assistant or PDA, and mobile communication and other terminals, which may be provided with memories for storing a web browser for connecting with the software providing server 130 via the wired and wireless communication networks and computer programs, and microprocessors for executing the programs to calculate and control. In general, the user terminal 110 may be a PC although any other forms of terminal may be used as long as they connect to the wired and wireless communication networks to make a server-client communication, and it is intended to encompass the notebook computers, mobile communication and other terminals, PDAs, and any other communicating and/or computing terminal equivalents.

The user terminal 110 is adapted to calculate and control specific software wherein the token 120 coupled thereto in a dongle format is checked whether it holds a requisite seculet (or called 'software chunk') for running the software and if so, transmitting an executive instruction to run the seculet to the token 120 and upon receipt of the executive result from the token 120 permitting the software to run in a controlled manner. Here, the seculet is termed from combining the words of secure and applet.

When the seculet is needed during an execution of the specific software, the user terminal 110 requests the token 120 for identity path information of the seculet, and upon receiving the same performs a function of identifying the seculet in the token 120.

The user terminal 110 performs a function to authenticate the token 120 with sending and receiving encoded or decoded messages between the specific program and the token 120 through their shared key to see if they are determined to have a common encoding method. Based on the information of the seculet or identity path, the user terminal 110 transmits input parameters and executive instructions to the token 102, and loads the seculet from the token 120 onto the executable memory areas before setting the input parameters to perform receiving the result of executing the pertinent code.

The token 120 may store the seculet and connect in a dongle format to the user terminal 110 in order to transmit the seculet to the terminal 110, and upon receiving an executive instruction from the user terminal 110 performs delivering the executive result of loading the seculet onto the executable memory areas.

The software providing server 130 may have a common hardware structure with typical web servers. However, in software side, it may incorporate program modules, which may be implemented using C, C++, Java, Visual Basic, Visual C, or any other languages to provide various functions. The software providing server 130 may be implemented in the form of a web server, which generally means a computer system having computer software (web server program) installed therefor and connected with unspecified multiple clients and/or other servers thru Internet-like open computer networks to receive a request to perform tasks from the clients or other web servers and generate the executive result to supply.

However, the software providing server 130 is intended to encompass not only the described web server program but also extends to a series of application programs operating on the above web servers and in some cases, internally established databases.

The resultant software providing server 130 may be implemented using web server programs, which are provided in various versions to typical server hardware depending on operation systems including DOS, windows, Linux, UNIX, and Macintosh in which websites and Internet information server (IIS) used in the windows environment and CERN, NCSA, APPACH, and such used in the UNIX environment are typical. Also, the software providing server 130 may operate in association with the authentication and payment systems for distributing software.

Additionally, the software providing server 130 may store and manage classified information on membership applications and software distribution in databases, which may be implemented either internally or externally of the software providing server 130.

Specifically, such databases mean the general data structures implemented in a computer system storage space (hard disc or memory) using a database management program (DBMS) to form a data storage where data search (extraction), deletion, edition, addition, etc are free, and they may be embodied using a relational database management system (RDBMS) such as Oracle, Infomix, Sybase, and DB2, an object oriented database management system (OODBMS) including Gemston, Orion, and 02, and XML Native Database like Excelon, Tamino, and Sekaiju according to the purpose of the present aspect with appropriate fields or elements provided to fulfill the database's own function.

When the user terminal 110 has specific software purchased, the software providing server 130 performs to check if the dongle format of a token is present on the user terminal 110, and if it is present as at 12, encode a seculet to run the software, and then transmit the same to the token.

The software providing server 130 performs to encode the seculet in at least one method of a substitution, transposition, rotor machine, private key, and public key.

The software providing server 130 also performs to decode the encoded seculet and check to store the decoded seculet before completing the software purchase.

Referring now to Figure 2, schematically shown is a block diagram of a user terminal 110 in accordance with this aspect.

The user terminal 110 in this aspect may include a terminal communicator 210, a terminal controller 220, and a terminal storage 230.

In this aspect, only the terminal communicator 210, terminal controller 220, and terminal storage 230 are described constituting the user terminal 110 although it is exemplary and should be understood by the persons skilled in the art that these components of the user terminal 110 may be varied and modified within the essential characteristics of the present aspect.

The terminal communicator 210 is a communication means adapted to operate in association with the token 210 and performs to transceive various data.

The terminal controller 220 in the aspect is a control means for generally controlling the functions of the user terminal 110 to calculate and control specific software by checking whether the dongle format token 120 holds a seculet needed for running the specific software, and if so, transmitting the instruction to execute the seculet to the token 120, and receiving the result of the execution from the token 120 in order to activate the specific software.

When the seculet is called for during the execution of the specific software, the terminal controller 220 is adapted to request the token 120 for the seculet's information of the identity path and upon receiving the same proceeds to identify the presence of the seculet in the token 120.

The terminal controller 220 performs to authenticate the token 120 by determining the specific program and the token 120 share a common encoding scheme through transceiving encoded or decoded messages via a shared key between the program and the token 120. Based on the information of the seculet or identity path, the terminal controller 220 transmits input parameters and executive instructions to the token 120, loads from it the seculet onto an executable memory area, and then performs setting the input parameters to receive the executive result of executing the pertinent codes.

The terminal storage 230 is a means for storing various data needed to operate the user terminal 110 which functions to store specific software product.

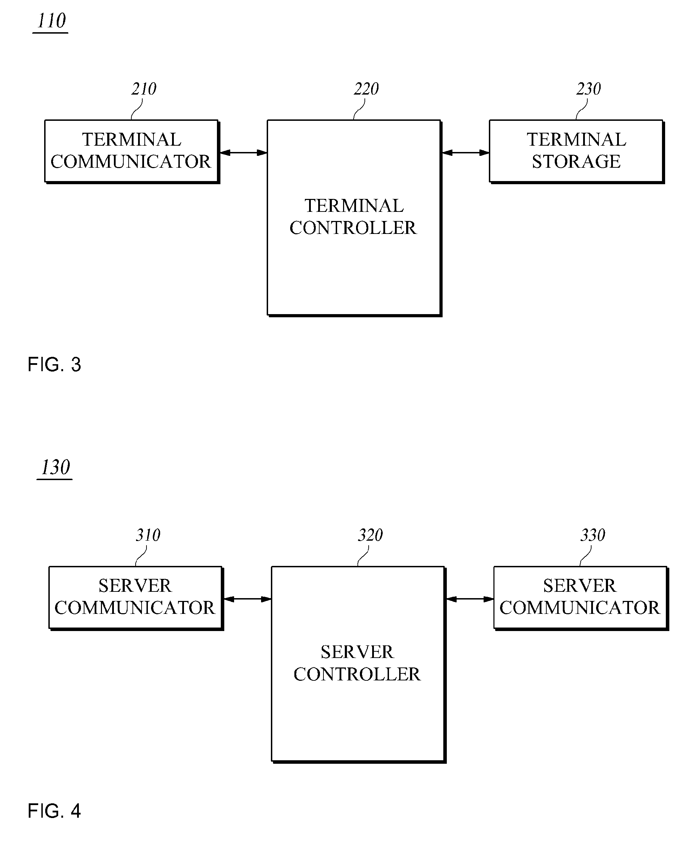

Referring to Figure 3, a schematic block diagram of a software providing server 130 in accordance with the present aspect.

The software providing server 130 in this aspect may comprise a server communicator 310, a server controller 320, and a server storage 330.

In this aspect, only the server communicator 310, server controller 320, and server storage 330 are described constituting the software providing server 130 although it is exemplary and should be understood by the persons skilled in the art that these components of the software providing server 130 may be varied and modified within the essential characteristics of the present aspect.

The server communicator 310 is a communication means adapted to operate in association with the user terminal 110 and performs to transceive various data.

The server controller 320 in the present aspect is a control means for generally controlling the functions of the server 130 and in particular the server communicator 330 so that when the user terminal 110 has purchased specific software it checks whether a dongle format token is present at the user terminal 110, and if the token 120 is found, encode the requisite seculet to run the software before transmitting to the token 120.

The server controller 320 performs to encode the seculet in at least one method of a substitution, transposition, rotor machine, private key, and public key. The server controller 320 performs to decode the encoded seculet and check that the token 120 encodes and stores the decoded seculet before completing the software purchase process.

The server storage 330 is a means for storing various data needed to operate the server 130 which functions to store specific software product and/or the seculet.

FIG. 4 is a schematic block diagram of the token 120 in accordance with this aspect.

The token 120 in this aspect may comprise a token manager 410 and storage 420.

In this aspect, the token 120 is described with the components of the token manager 410 and storage 420 only although it is exemplary and should be understood by the persons skilled in the art that these components of the token 120 may be varied and modified within the essential characteristics of the present aspect.

The token manager 410 in the aspect is a control means for controlling the general functions of the token 120 to perform transmitting the seculet to the user terminal 110, and upon receiving executive instructions deliver to the user terminal 110 the result of execution of loading the seculet onto the executable memory. Specifically, the token manager 410 may be a microprocessor for calculating and controlling the seculet in the storage 420 through executing thereof. The storage 420 is a means for storing various data needed to operate the token 120 which functions to store multiple seculets.

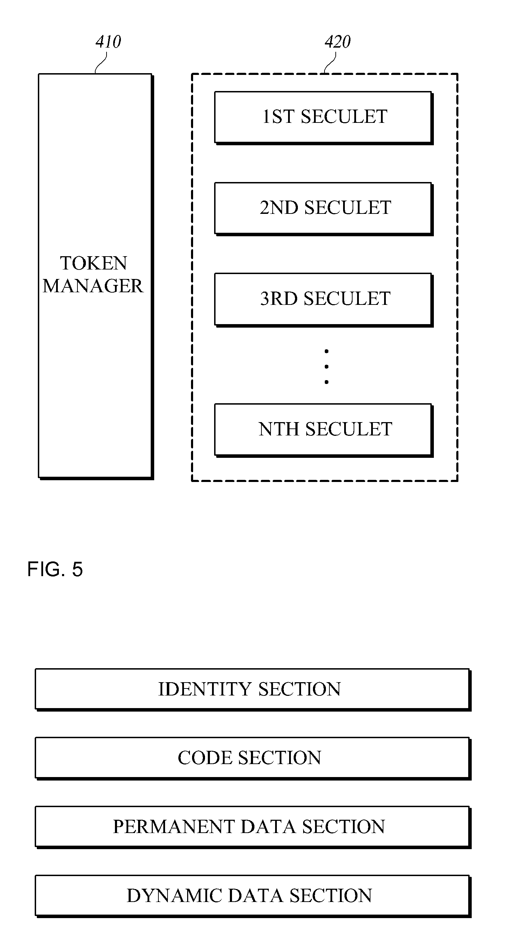

FIG. 5 is a schematic block diagram of a seculet in accordance with this aspect.

The seculet according to the aspect means a requisite program to run specific software and may include an identity section, a code section, a permanent data section, and a dynamic data section.

The identity section may include at least one of character string, description, icon image, and unique number data for establishing a seculet identity. The identity section may be employed as search/execution selection information that is necessary to use the seculet residing inside the token 120 at the user terminal 110.

The code section may include the executive instructions run in the token 120. The code section may be made in a machine language or higher level of programming languages and contain executive instructions of the seculet. The in/output complexity of the executive instructions is desirably made to have greater than an appropriate degree through employing permanent data/dynamic data to preclude the concern of a possible replication.

The permanent data section may store permanent data for use as a reference. The permanent data section may be stored in a mass storage such as NAND flash. And the stored permanent data section may be referenced during the execution of the code section. I.e., various reference tables used in different software products become the object to refer to.

The dynamic data section may store history information according to the execution of the seculet. The dynamic data section is adapted to record information of the status caused during the execution of the code and maybe stored in NAND flash although its storage may be a section with a higher I/O speed such as EEPROM or Nor. In addition, the dynamic data make the seculet context sensitive, permitting various licensing schemes to be implemented based on usage, function, times, data amount, etc.

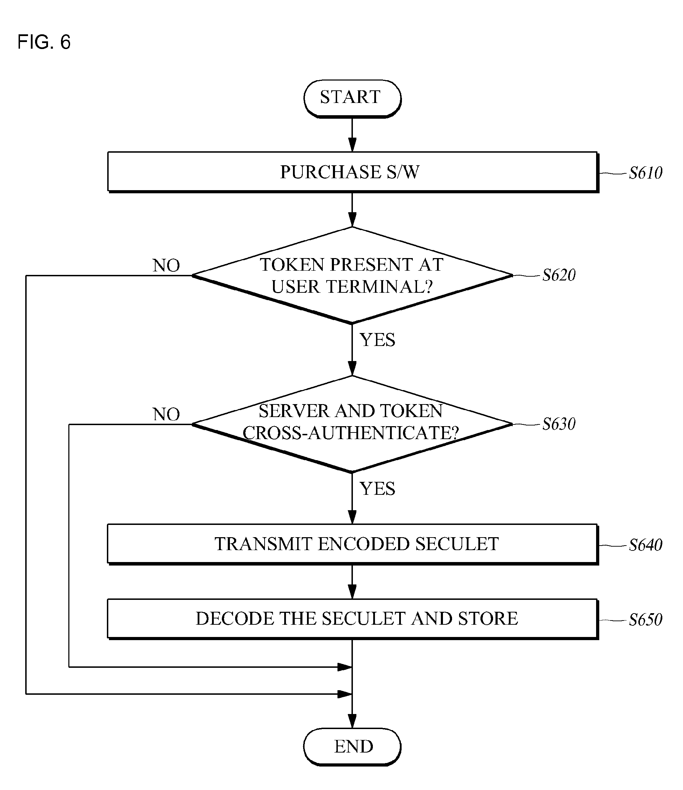

FIG. 6 is a flow chart for illustrating a method for the software providing server 130 to provide the seculet in this aspect.

The user terminal 110 starts with accessing the software providing server 130 to purchase specific software at step S610. The software providing server 130 then checks whether the dongle format token 120 is present at the user terminal 110. If the token 120 is present, the software providing server 130 checks whether the server 130 and the token 120 cross-authenticate at step S630.

Upon confirmation of the cross-authentication between the server 130 and the token 120 at S630, the software providing server 130 encodes the requisite seculet to run the specific software and transmits it to the token 120 at step S640. At this time, the software providing server 130 may do the seculet encoding in at least one method of a substitution, transposition, rotor machine, private key, and public key.

At step S650, the token 120 decode and store the seculet coded. The software providing server 130 may confirm the decoding and storing of the seculet by the token 120 and then complete the software purchase procedure.

Although FIG. 6 illustrates the software providing server 130 executes the steps from S610 to S650 in the numerical sequence, it is only to exemplify the technical idea of this aspect and will be understood by the skilled persons in the art that the software providing server 130 may execute modified sequence of steps from the FIG. 6 illustration or one or more selected steps from S610 to S650 concurrently or otherwise without restricting FIG. 6 to the serial order within the scope of the essential characteristics of the present aspect.

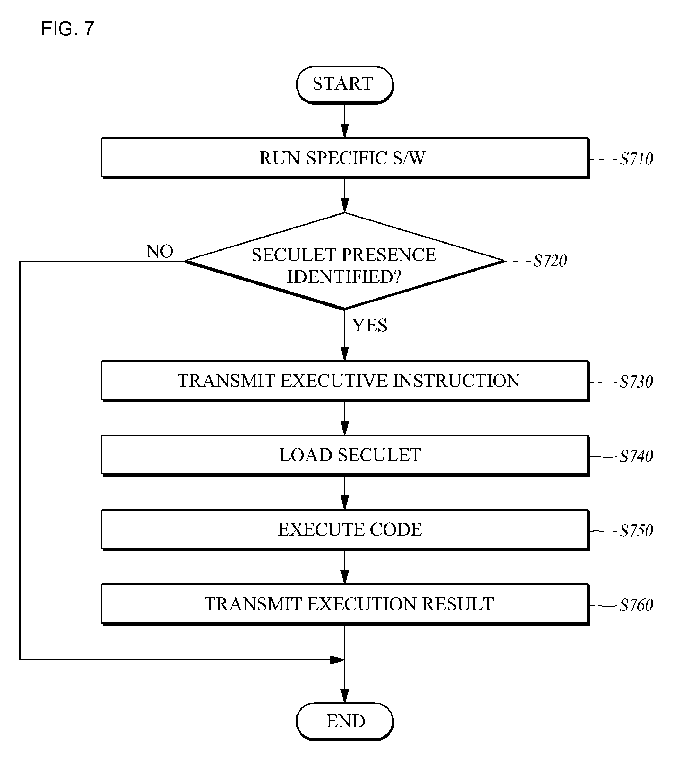

FIG. 7 is a flow chart for illustrating a method for executing specific software with the user terminal 110 operating in association with the token 120 in accordance with the present aspect.

The user terminal 110 starts with executing specific software at step S710. The user terminal 110 then checks whether the dongle format token 120 coupled thereto holds the requisite seculet to run the software at step S720. For example, the user terminal 110 may ask the token 120 for information of the identity path of the seculet when it is required in the process of running the software, and upon receiving the identity path information from the token 120 the user terminal 110 can recognize the presence of the seculet at the token 120.

Besides, the user terminal 110 performs to authenticate the token 120 when it can verify that the specific software and the token 120 have a common encoding scheme through transceiving the encoded or decoded messages via a shared key between them.

From step S710, upon confirming the presence of the seculet the user terminal 110 transmit the executive instruction to execute the seculet to the token 120 at step S730. I.e., the user terminal 110 transmits to the token 120 input parameters and the executive instruction on the ground of the seculet or identity path information.

The token 120 then loads the seculet onto the executable memory area at step S740. The token 120 executes the pertinent code by setting the input parameters at step S750. Next, the token 120 transmits the executive result to the user terminal 110 at step S760. Finally, the user terminal 110 receives the executive result from the token 120 to activate the specific software.

Although FIG. 7 illustrates the user terminal 110 and the token 120 execute the steps from S710 to S760 in the numerical sequence, it is only to exemplify the technical idea of this aspect and will be understood by the skilled persons in the art that the user terminal 110 and the token 120 may execute modified sequence of steps from the FIG. 7 illustration or one or more selected steps from S71 0 to S760 concurrently or otherwise without restricting FIG. 7 to the serial order within the scope of the essential characteristics of the present aspect.

As described above, the software license protection method in the disclosed aspects may be implemented on a computer program and provided in a computer readable recording medium. The computer readable recording medium which encodes the computer program that implements the respective steps of the software license protection method may comprise any kinds of recording devices for recording data readable by computers. Examples of such computer readable recording medium include ROM, RAM, CD-ROM, magnetic tapes, floppy discs, and optical data storages, and further comprise an implementation in carrier waves (e.g. transmission over the Internet). In addition, the computer readable recording medium may be provided in a distributed processing system where computer systems are networked to store and execute the computer readable codes at distributed locations. Furthermore, functional programs, codes, and code segments to implement the disclosed aspects may be easily deduced by programmers skilled in the art thereof.

In the description above, although all of the components of the aspects of the present disclosure may have been explained as assembled or operatively connected as a unit, the present disclosure is not intended to limit itself to such aspects. Rather, within the objective scope of the present disclosure, the respective components may be selectively and operatively combined in any numbers. Also, every one of the components may be implemented by itself in hardware while the respective ones can be combined in part or as a whole selectively and implemented in a computer program having program modules for executing functions of the hardware equivalents. Codes or code segments to constitute such a program may be easily deduced by a person skilled in the art. The computer program may be stored in computer readable media, which in operation can realize the aspects of the present disclosure. As the computer readable media, the candidates include magnetic recording media, optical recording media, and carrier wave media.

Also, terms like 'include', 'comprise', and 'have' should be interpreted in default as inclusive or open rather than exclusive or closed unless expressly defined to the contrary. All the terms that are technical, scientific or otherwise agree with the meanings as understood by a person skilled in the art unless defined to the contrary. Common terms as found in dictionaries should be interpreted in the context of the related technical writings not too ideally or impractically unless the present disclosure expressly defines them so.

Although exemplary aspects of the present disclosure have been described for illustrative purposes, those skilled in the art will appreciate that various modifications, additions and substitutions are possible, without departing from the scope and spirit of the disclosure. Therefore, exemplary aspects of the present disclosure have not been described for limiting purposes. Accordingly, the scope of the disclosure is not to be limited by the above aspects but by the claims and the equivalents thereof.

### [Industrial Applicability]

The software license protection method, system, and medium readable by server, terminal, and computer according to the present disclosure as above provide a user/purchaser of certain software with a requisite component of the seculet from the server to run the software through a dongle format token detachably coupled to a user terminal, prompting the user during the execution of the software to check whether the requisite seculet to run the software is present in the dongle type token and, if it is present, transmitting an executive instruction to run the seculet to the token and upon receipt of the executive result activating the software in a controlled manner, whereby overcoming software vulnerabilities to reverse engineering to keep the customers from inconveniences of authentication inconveniences with typical online dependency among others.

### CROSS-REFERENCE TO RELATED APPLICATION

If applicable, this application claims priority under 35 U.S.C §119(a) on Patent Application No. 2008-0134892 filed in Korea on December 26, 2008, the entire content of which is hereby incorporated by reference. In addition, this non-provisional application claims priorities in countries, other than U.S., with the same reason based on the Korean Patent Application, the entire contents of which are hereby incorporated by reference.

## Claims

1. A software license protection terminal comprising:
a terminal communicator operated in association with a coupled dongle format token;
a terminal controller for operating and controlling certain software by checking whether the token has a requisite seculet to run the software and if so, transmitting to the token an executive instruction to run the seculet, and receiving the executive result from the token to activate the specific software; and
a terminal storage for storing the specific software.

2. The software license protection terminal of claim 1, wherein the seculet is a program comprised of requisite components to run the specific software.

3. The software license protection terminal of claim 2, wherein the seculet comprises:
an identity section including at least one of character string, description, icon image, and unique number data for establishing the identity of the seculet;
a code section including the executive instruction run in the token;
a permanent data section for storing permanent data used as a reference; and
a dynamic data section for storing history information from executing the seculet.

4. The software license protection terminal of claim 1, wherein the user terminal asks the token for information of an identity path of the seculet when the latter is required in the process of running the specific software, and upon receiving the identity path information from the token the user terminal recognizes the presence of the seculet at the token.

5. The software license protection terminal of claim 1, wherein the terminal controller performs to authenticate the token when it verifies that the specific software and the token have a common encoding scheme through transceiving encoded or decoded messages via a shared key between them.

6. The software license protection terminal of claim 1, wherein the terminal controller transmits an input parameter and the executive instruction to the token based on the information of the seculet or the identity path, loads the seculet from the token onto an executable memory area, and then performs setting the input parameter to receive the executive result of executing a pertinent code.

7. A software license protection server comprising:
a server communicator operated in association with a user terminal;
a server controller for checking whether there is a dongle format token at the user terminal when it has a purchase of specific software, and if the token is present, encoding and transmitting a requisite seculet to run the specific software to the token; and
a server storage for storing at least one of the specific software and the seculet for information.

8. The software license protection server of claim 7, wherein the server controller does the seculet encoding in at least one method of a substitution, transposition, rotor machine, private key, and public key.

9. The software license protection server of claim 7, wherein the server controller confirms decoding and storing of the seculet by the token and then completes the software purchase.

10. A software license protection system comprising:
a user terminal for operating and controlling certain software at the presence of a requisite seculet to run the software by transmitting an executive instruction to run the seculet, and upon receipt of the executive result activating the software; and
a token storing the seculet and being capable of coupling in a dongle format to the user terminal for transmitting the seculet to the user terminal, and upon receiving the executive instruction relaying the executive result of loading the seculet onto an executable memory area.

11. The software license protection system of claim 10, wherein the token comprises:
a storage for storing a plurality of the seculet; and
a microprocessor for calculating and controlling the seculets through executing thereof.

12. A software license protection method comprising:
executing a specific software;
checking for the presence of a seculet to run the specific software in an associated token, and if the seculet is present, transmitting an executive instruction for executing the seculet to the token; and
upon receipt of the result of executing the seculet activating the software.

13. The software license protection method of claim 12, wherein the step of transmitting executive instruction comprises:
asking the token for information of an identity path of the seculet when it is required in the process of executing the software; and
upon receiving the identity path information from the token recognizing the presence of the seculet at the token.

14. The software license protection method of claim 13, further comprising after the seculet recognizing, authenticating the token with a verification that the specific software and the token have a common encoding scheme through transceiving encoded or decoded messages via a shared key between them

15. The software license protection method of claim 12, wherein the step of transmitting executive instruction comprises transmitting an input parameter and the executive instruction to the token based on the information of the seculet or the identity path.

16. The software license protection method of claim 12, wherein the step of activating the software loads the seculet from the token onto an executable memory area, and then performs setting the input parameter to receive the executive result of executing a pertinent code.

17. A computer readable medium which encodes a computer program that implements the software license protection method in one of claims 12 to 16.
